# EUROPÄISCHE PATENTANMELDUNG

(11) **EP 2 030 679 A1**
(43) Veröffentlichungstag der Anmeldung: **04.03.2009**
(21) Anmeldenummer: 07017235.8
(22) Anmeldetag: 03.09.2007
(51) Int. Cl.: B01J 19/24, C08G 63/78

(54) **Polymerisationsreaktor, Polymerisationsvorrichtung, Verfahren zur Herstellung von bioabbaubarem Polyester sowie Verwendungen**

(71) Anmelder: Uhde Inventa-Fischer GmbH, 13509 Berlin (DE)
(72) Erfinder: Hagen, Rainer, Dr., 13465 Berlin (DE); Mühlbauer, Udo, 10119 Berlin (DE)
(74) Vertreter: Pfenning, Meinig & Partner GbR

(57) **Zusammenfassung**

Vorliegende Erfindung betrifft einen Polymerisationsreaktor zur kontinuierlichen Polymerisation, wobei der Reaktor zweistufig aufgebaut ist und eine Vorpolymerisationsstufe, die als Rührkessel oder als Schlaufenreaktor ausgebildet ist, sowie eine Hauptpolymerisationsstufe, die als Rohrreaktor ausgebildet ist, umfasst. Weiterhin betrifft vorliegende Erfindung ein Verfahren zur Herstellung von bioabbaubarem Polyester, insbesondere Polylactid, wobei der erfindungsgemäße Reaktor verwendet wird. Ebenso betrifft die Erfindung eine Polymerisationsvorrichtung, die neben dem Polymerisationsreaktor weitere Bestandteile umfasst.

## Beschreibung

Vorliegende Erfindung betrifft einen Polymerisationsreaktor zur kontinuierlichen Polymerisation, wobei der Reaktor zweistufig aufgebaut ist und eine Vorpolymerisationsstufe, die als Rührkessel oder als Schlaufenreaktor ausgebildet ist, sowie eine Hauptpolymerisationsstufe, die als Rohrreaktor ausgebildet ist, umfasst. Weiterhin betrifft vorliegende Erfindung ein Verfahren zur Herstellung von bioabbaubarem Polyester, insbesondere Polylactid, wobei der erfindungsgemäße Reaktor verwendet wird. Ebenso betrifft die Erfindung eine Polymerisationsvorrichtung, die neben dem Polymerisationsreaktor weitere Bestandteile umfasst.

Aus der US 5,484,882 ist ein Polymerisationsreaktor zur Hersteller von Copolyester aus cyclischen Estern in Kombinationen mit Lactonen bekannt, der einen Rührkessel sowie einen statischen Mischer umfasst. Es ist bekannt, dass die in dieser Patentschrift beschriebenen Copolymere bei gleicher Temperatur eine wesentlich niedrigere Schmelzviskosität aufweisen als ein Homopolymer aus nur einer der beiden dort genannten Komponenten. Wird also beabsichtigt, ein Homopolymer, insbesondere Polylactid, herzustellen, ist der in der US 5,484,882 beschriebene Polymerisationsreaktor, der als Hauptpolymerisationsstufe einen statischen Mischer aufweist, ungeeignet, da die wesentlich höheren Schmelzviskositäten von beispielsweise Dilactid zu Verstopfungen und/oder Blockierungen eines derartigen statischen Mischers führen. Derartige Verstopfungen bzw. Blockierungen führen des Öfteren zu Produktionsausfällen derartiger Anlagen, die mit kostspieligen Stillstandzeiten bzw. Reinigungen der Polymerisationsvorrichtung verbunden sind.

Der nächstliegende Stand der Technik ist die US 5,484,882. Dort ist die Kombination eines Rührkessels mit einem statischen Mischer genannt. Rohstoff ist jedoch ein cyclischer Ester, kombiniert mit mindestens einem Lacton. Es ist bekannt, dass Copolymere bei gleicher Temperatur eine wesentlich niedrigere Schmelzviskosität haben als ein Homopolymer aus nur einem der beiden Cokomponenten. Die Beispiele zeigen Viskositäten bis 56.000 Poise = 5.600 Pa_{˙}s. Bei Copolymeren sind jedoch in der Regel Schmelzviskositäten zwischen 100 und 25.000 Pa˙s anzutreffen.

Ausgehend von diesen genannten Nachteilen des Standes der Technik ist es somit Aufgabe der vorliegenden Erfindung, einen Polymerisationsreaktor sowie eine dazugehörige Polymerisationsvorrichtung bereitzustellen, mit dem eine einfache und problemlose Polymerisation, insbesondere von Homopolymeren wie beispielsweise Polylactid, möglich ist. Weiterhin ist es Aufgabe der vorliegenden Erfindung, ein Verfahren zur Herstellung von bioabbaubarem Polyester und/oder Copolyester, insbesondere Polylactid, bereitzustellen, mit dem sich Polylactide in hoher Reinheit herstellen lassen, wobei das Verfahren zuverlässig, d. h. ohne dass die im Stand der Technik genannten Probleme auftreten, durchführbar ist.

Diese Aufgabe wird bezüglich des Polymerisationsreaktors mit den Merkmalen des Patentanspruchs 1, der Polymerisationsvorrichtung mit den Merkmalen des Patentanspruches 9 sowie bezüglich des Verfahrens mit den Merkmalen des Patentanspruchs 13 gelöst. Dabei stellen die jeweils abhängigen Ansprüche vorteilhafte Weiterbildungen dar. Mit den Ansprüchen 24 bis 26 werden Verwendungsmöglichkeiten genannt.

Erfindungsgemäß wird somit ein Polymerisationsreaktor zur kontinuierlichen Polymerisation bereitgestellt, der mindestens folgende Bestandteile umfasst:
a) mindestens einen Rührkessel und/oder einen Schlaufenreaktor als erste Polymerisationsstufe, sowie im Anschluss daran
b) mindestens einen Rohrreaktor als zweite Polymerisationsstufe,
wobei der Rohrreaktor Einbauten aufweist, die das Geschwindigkeitsprofil des durchströmenden Fluids über den Querschnitt des Rohrreaktors vergleichmäßigen.

Die erfindungsgemäßen strömungsvergleichmäßigenden Einbauten unterscheiden sich von einem statischen Mischer darin, dass sie nicht mischen, d.h. Auftrennung in Teilströme und anschließend axiales und radiales Umschichten der Teilströme. Die erfindungsgemäßen Einbauten üben nun einen Strömungswiderstand aus, der in axialer und radialer Richtung gezielt bemessen ist, so dass ein annähernd gleichmäßiges Profil der Strömungsgeschwindigkeit über den Rohrquerschnitt erreicht wird. Dabei werden die Stromfäden nicht umgeschichtet, sondern bleiben annähernd parallel und werden nur gegeneinander beschleunigt oder verzögert. Ein bevorzugtes Kriterium für die Vergleichmäßigung ist, dass am Austritt des Rohrreaktors der Quotient aus minimaler Verweilzeit eines Stromfadens und der mittleren Verweilzeit des Reaktorinhalts nicht kleiner als 0,5 ist.

Unter einem Schlaufenreaktor wird ein Reaktor verstanden, der eine Rückvermischung des Reaktionsgemisches durch Führen in einer Schlaufe ermöglicht, wodurch der Polymerisationsreaktion der Start erleichtert wird.

Prinzipiell eignen sich somit alle Einbauten, die eine Angleichung des Strömungsprofils über den Querschnitt des Rohrreaktors bewerkstelligen. Fluide, die ein Rohr durchströmen, weisen im Normalfall, d. h. ohne Einbauten im Rohr, ein parabelförmiges Geschwindigkeitsprofil in Längsrichtung des Rohres auf (laminares Strömungsprofil). Somit sind die Strömungsgeschwindigkeiten in der Rohrmitte am größten, während die Strömung des Fluids an den wandnahen Bereichen des Rohres durch Reibungskräfte bedingt verlangsamt wird. Ziel der Erfindung ist somit, eine Vereinheitlichung des Strömungsprofils zu bewerkstelligen, d.h. ein Strömungsprofil zu gewährleisten, das möglichst über den gesamten Querschnitt des Rohres vereinheitlicht ist, so dass die Strömungsgeschwindigkeit des Fluids überall im Rohr möglichst gleich groß ist. Dadurch werden eine starke Durchmischung der hochviskosen Polymerschmelze und dabei auftretende große Scherkräfte verhindert, die einerseits die Polymerqualität negativ beeinflussen, zum anderen Verstopfungen des Rohrreaktors verursachen. Als weiterer Vorteil gegenüber statischen Elementen, die eine starke permanente Mischung der Polymerschmelze bedingen, ist zu nennen, dass somit ein geringerer Strömungswiderstand erzielt wird, der sich insbesondere mit steigender Viskosität nachteilig bei Vorrichtungen des Standes der Technik auswirkt. Mit der erfindungsgemäßen Vorrichtung ist somit eine leicht durchführbare Polymerisation bis zu sehr hohen mittleren molaren Massen bei gleichzeitig exzellenter Produktqualität möglich.

Vorteilhafterweise wird dies durch Einbauten im Rohr bewerkstelligt, die ausgewählt sind aus der Gruppe bestehend aus perforierten Lochscheiben, konzentrischen Ringspalten, Verdrängungskörpern und/oder röhrenförmigen Elementen. Die genannten Einbauten verhindern gleichzeitig ein Durchmischen des Fluids, da es durch Mischvorgänge immer wieder zu den aus dem Stand der Technik bekannten Problemen kommt. Dabei sind die Lochscheiben quasi zweidimensional gestaltet, d. h. erstrecken sich über den Rohrquerschnitt, ohne dabei eine nennenswerte axiale Ausgestaltung aufzuweisen, und besitzen bevorzugt konzentrisch angeordnete Löcher, mit der Maßgabe, dass die Löcher, die weiter wandseitig bezüglich des Rohres angeordnet sind, einen größeren Durchmesser aufweisen als die Löcher, die sich weiter in der Mitte des Rohres befinden. Ebenso ist auch die Möglichkeit gegeben, konzentrische Ringspalte als Einbauten zu verwenden. Bei den Ringspalten sind hierbei zweierlei Ausführungsformen denkbar, zum einen eine quasi zweidimensionale Ausführungsform, die in Analogie zu den perforierten Lochscheiben ausgebildet ist, d. h., dass die bezüglich des Rohrreaktors weiter wandseitig angeordneten Ringspalte an Breite zunehmen, zum anderen aber auch die Ausführungsform, dass die Ringspalte dreidimensional ausgebildet sind, d. h. noch eine weitere Dimension in axialer Richtung des Rohrreaktors aufweisen.

Bei den zweidimensionalen Einbauten kann die Angleichung des Strömungsprofils auch durch die Form der Einbauten selbst bedingt sein. Alternativ oder zusätzlich zur Variation der Größe der Löcher bzw. Spalte können die zweidimensionalen Einbauten z.B. in konzentrischer Kegelform geprägt sein, wobei die Spitze des Kegels gegen die Strömungsrichtung des Fluids weist. Unter konzentrischer Kegelform wird dabei verstanden, dass der Kegelspitz sich bezüglich der Fläche des zweidimensionalen Einbauelements mittig angeordnet befindet. Dadurch wird erreicht, dass der am schnellsten strömende Teil des Fluids auf die Kegelspitze auftrifft und über den Kegelmantel zur Seite ausgelenkt wird. Durch die dabei auftretenden Querkräfte, die der axialen Bewegung des Fluids teilweise entgegenwirken, kommt es zu einer Verlangsamung des in der Mitte des Rohrreaktors befindlichen Teil des Fluids und somit zu einer Vereinheitlichung des Geschwindigkeitsprofils.

Als Alternative zu dreidimensionalen Ringspalten sind auch röhrenförmige Elemente denkbar, wobei sich die Röhren, die weiter in der Mitte des Rohrreaktors angeordnet sind, dünner ausnehmen als weiter am Rand des Rohrreaktors eingebrachte Röhren. Die Röhrenelemente können dabei in einer dreidimensionalen Ausführungsform der Lochscheiben oder als Bündel einzelner Rohre ausgebildet sein. Gemeinsames Kriterium dabei ist, dass der Rohrdurchmesser mit zunehmender radialer Entfernung von der Mitte weg zunimmt. Ebenso ist eine Vereinheitlichung des Strömungsprofils des Fluids und somit eine Angleichung der Geschwindigkeit über den gesamten Rohrquerschnitt durch entsprechend angebrachte Verdrängungskörper möglich.

Bei den dreidimensional ausgebildeten Elementen, insbesondere den konzentrischen Ringspalten, Verdrängungskörpern und/oder röhrenförmigen Elementen ist es bevorzugt, wenn sie in Abhängigkeit ihrer radialen Anordnung bezüglich des Querschnittes des Rohrreaktors unterschiedliche lang in axialer Richtung des Rohrreaktors ausgebildet sind. Somit ist eine zusätzliche bzw. alternative Möglichkeit gegeben, die Strömungsgeschwindigkeit des entsprechenden Fluids im Reaktor über den Querschnitt des Reaktors anzugleichen. Das dabei zugrunde liegende Prinzip ist ebenso die Reibung des Fluids an den entsprechenden dreidimensional ausgebildeten Einbauelementen. Dadurch, dass die Einbauten in der Mitte des Reaktors in axialer Ausrichtung eine größere Länge aufweisen, entsteht zwischen dem Fluid und dem jeweiligen Einbauelement eine größere Reibung als beispielsweise an den weiter wandseitig angebrachten Einbauten, die in axialer Richtung des Rohrreaktors kürzer ausgebildet sind. Somit findet eine verstärkte Verlangsamung des Fluids in der Mitte des Rohrreaktors als an Randbezirken statt. Vorteilhaft ist hierbei auch, wenn die axiale Längenverteilung der Einbauelemente mit dem ungebremsten, laminaren Strömungsgeschwindigkeitsprofil korreliert.

Dabei ist auch eine mehrfache Anordnung gleicher oder verschiedener Einbauten in einem Rohrreaktor hintereinander möglich.

Weiterhin ist es ein vorteilhaftes Merkmal des Polymerisationsreaktors, wenn durch die Einbauten gewährleistet ist, dass der Quotient aus minimaler Verweilzeit des den Rohrreaktor am schnellsten durchströmenden Teil des Fluids und der mittleren Verweilzeit des gesamten Fluids im Rohrreaktor mindestens 0,5 beträgt.

Um möglichst hohe mittlere molekulare Massen zum einen, aber auch möglichst hohe Umsatzraten des eingesetzten Monomers zu erzielen, ist es bevorzugt, wenn mindestens zwei Rohrreaktoren hintereinander geschaltet sind.

Da mit einer derartigen Anordnung sehr hohe Molekulargewichte erzielt werden können, ist es dabei zweckmäßig, wenn bei Hintereinanderschaltung mehrerer Rohrreaktoren je zwischen zwei hintereinander geschaltete Reaktoren eine Zwischenpumpe eingebaut wird.

Weiterhin ist es bevorzugt, wenn im produktseitig letzten Drittel des mindestens einen Rohrreaktors mindestens eine Einspeisestelle und/oder mindestens ein Stutzen vorhanden ist. Eine derartige Ausgestaltungsform ermöglicht beispielsweise die Zugabe von weiteren Stoffen (z.B. Zugabe von Additiven wie beispielsweise Stabilisatoren oder Füllstoffen oder das Zublenden weiterer Polymere) und/oder die Applikation eines Vakuums, beispielsweise zur Entfernung von im Polymerstrang enthaltenem Restmonomer.

In einer weiteren vorteilhaften Ausgestaltungsform ist dabei vorgesehen, dass die Wandung des Rohrreaktors und/oder die Einbauten über einen Wärmeträger kühlbar und/oder beheizbar sind. Somit können gezielt die Reaktionsbedingungen, bei denen die jeweilige Polymerisation abläuft, gesteuert werden. Beispielsweise ist es vorteilhaft, bei exothermen Reaktionen den Reaktor bzw. die Einbauten zu kühlen, während bei endothermen Prozessen der Reaktor beheizt werden kann.

Erfindungsgemäß wird ebenso eine Polymerisationsvorrichtung zur Polymerisation eines bioabbaubaren, intermolekularen cyclischen Diesters einer alpha-Hydroxycarbonsäure der Formel I bereitgestellt, 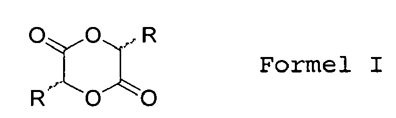 wobei R ausgewählt ist aus Wasserstoff oder linearen oder verzweigten aliphatischen Resten mit 1 bis 6 Kohlenstoffatomen, bzw. bevorzugt Dilactid ist, wobei ein im Voranstehenden beschriebener Polymerisationsreaktor sowie mindestens eine Reinigungsvorrichtung zur Reinigung des cyclischen Diesters der Formel I umfasst ist.

Dabei ist es weiter vorteilhaft, wenn dem Reaktor dabei die Reinigungsvorrichtung zur Reinigung des zuvor genannten cyclischen Diesters der Formel I vorgeschaltet ist. Diese Reinigungsvorrichtung kann dabei beispielsweise eine Trennwandkolonne sein.

Bei der Polymerisationsvorrichtung ist es ebenso vorteilhaft, wenn dem Polymerisationsreaktor eine Kondensationsvorrichtung zur Kondensation des Diesters der Formel I aus Dampfgemischen vorgeschaltet ist. Die zuvor genannten Möglichkeiten, bei denen der Polymerisationsreaktor somit Bestandteil einer Produktionsanlage zur Herstellung von Polylactid ist, gewährleisten somit, dass eine sehr effiziente Herstellung von Polylactid, ausgehend vom Rohprodukt Milchsäure in hoher Reinheit ermöglicht wird.

Erfindungsgemäß wird ebenso ein Verfahren zur Herstellung von bioabbaubarem Polyester und/oder Copolyester durch Ringöffnungspolymerisation mindestens eines intermolekularen cyclischen Diesters der Formel I bereitgestellt, 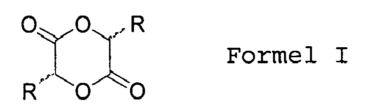 wobei R ausgewählt ist aus Wasserstoff oder linearen oder verzweigten aliphatischen Resten mit 1 bis 6 Kohlenstoffatomen, durch die Schritte
a) Einspeisen eines Gemisches enthaltend den Diester der Formel I in die erste Polymerisationsstufe des Polymerisationsreaktors und Durchführen einer Vorpolymerisation, sowie
b) Überführen des erhaltenen Vorpolymerisats in die zweite Polymerisationsstufe des Polymerisationsreaktors und Durchführen einer Polymerisationsreaktion.

Dabei ist es insbesondere vorteilhaft, wenn das Verfahren so geführt wird, dass der Quotient aus minimaler Verweilzeit des den Rohrreaktor am schnellsten durchströmenden Teil des Fluids und der mittleren Verweilzeit des gesamten Fluids im Rohrreaktor mindestens 0,5 beträgt.

Insbesondere ist die Verfahrensführung dabei derart gestaltet, dass die Vorpolymerisation im Schritt a) bis zu einem maximalen Umsatz des cyclischen Diesters der Formel I von 5 bis 70 mol-%, bevorzugt 30 bis 60 mol-% durchgeführt wird. Die Bestimmung des Umsatzes erfolgt dabei durch Ermittlung des Monomerengehaltes, z. B. durch Gaschromatographie.

Nach Überführen des derart hergestellten Vorpolymerisats wird die Polymerisationsreaktion im Schritt b) bevorzugt bis zu einer maximalen Schmelzviskosität von 100 mPa_{˙}s bis 25.000 mPa_{˙}s, vorzugsweise von 500 mPa_{˙}s bis 20.000 mPa_{˙}s durchgeführt.

Durch eine derart ausgestaltete Polymerisation lassen sich sehr hohe Umsatzraten erzielen. Bevorzugt wird die Polymerisationsreaktion im Schritt b) bis zu einem Umsatz des cyclischen Diesters der Formel I von mindestens 90 mol-%, bevorzugt mindestens 92,5 mol-%, besonders bevorzugt mindestens 95 mol-% durchgeführt.

In einer weiteren vorteilhaften Ausführungsform werden während und/oder im Anschluss an Schritt b) Stabilisatoren beigemischt.

Weiterhin ist es vorteilhaft, wenn im Anschluss an Schritt b) eine Entmonomerisierung durch Extraktion mit einem Lösungsmittel und/oder durch Vakuumentgasung erfolgt.

Ebenso ist es von Vorteil, wenn dem Gemisch vor Schritt a) und/oder vor Schritt b) Polymerisationskatalysatoren beigemischt werden.

Ebenso eröffnet das erfindungsgemäße Verfahren, dass während und/oder im Anschluss an Schritt b) mindestens ein Additiv, ausgewählt aus der Gruppe bestehend aus Nukleierungsmitteln, Farbstoffen, Verstärkungsstoffen, Verarbeitungshilfsstoffen, Weichmachern, Modifizierungsmitteln, Füllstoffen und/oder Antioxidantien beigemischt werden können.

Durch das erfindungsgemäße Verfahren ist ebenso die Möglichkeit gegeben, zu dem hergestellten Polyester und/oder Copolyester weitere Polymere, beispielsweise mindestens einen weiteren Polyester (z.B. PBT (Polybutylenterepthalat)) und/oder einen Polyether (z.B. Polyethylenglykol) zuzumischen und somit Blends herzustellen. Die Menge des jeweiligen zugesetzten Polymers ist über weite Bereiche variabel und wird vom Fachmann je nach den gewünschten Eigenschaften des Produktes eingestellt.

Insbesondere eignet sich das Verfahren zur Herstellung von Polylactid, wobei hier von Dilactid ausgegangen wird.

Die vorliegende Erfindung wird anhand der nachfolgend abgebildeten Figuren sowie den Beispielen näher erläutert. Die in den Figuren dargestellten Ausführungsformen sind dabei jedoch lediglich beispielhaft zu verstehen und schränken die Erfindung keinesfalls auf die dort dargestellten Merkmalskombinationen ein.

Dabei zeigen:
- Fig. 1: eine Ausgestaltungsform eines erfindungsgemäßen Polymersationsreaktors, und
- Fig. 2: eine schematische Darstellung des Gesamtprozesses der Polymerisation von Lactid, ausgehend von Milchsäure, anhand einer Ausführungsform einer erfindungsgemäßen Polymerisationsvorrichtung.

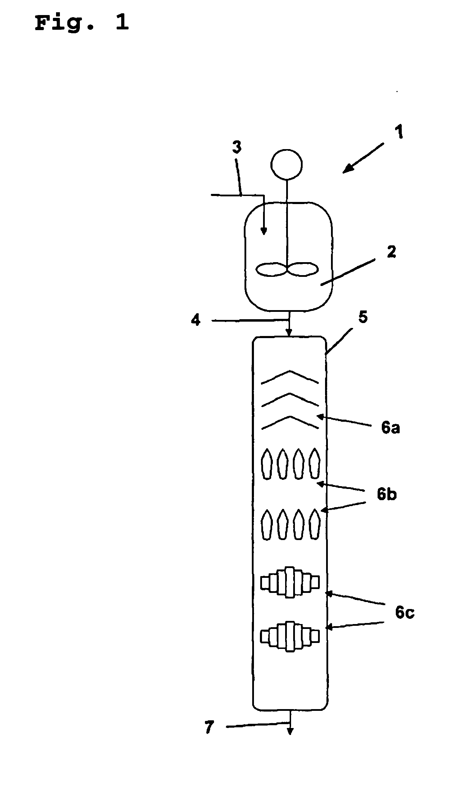

In Fig. 1 ist ein erfindungsgemäßer Polymerisationsreaktor 1 dargestellt, der dabei einen Rührkessel 2 als erste Polymerisationsstufe sowie einen Rohrreaktor 5 als weitere Polymerisationsstufe umfasst. Dabei wird das Monomer Dilactid über die Rohrleitung 3 in den Rührkessel geleitet und dort bis zu einem Umsatz von ca. 60 % des Monomeren vorpolymerisiert. Die Bestimmung der Umsatzrate erfolgt dabei durch Ermitteln des restmonomeren Gehaltes des Inhalts des Rührkessels. Die Bestimmung erfolgt dabei anhand von dem Fachmann geläufigen Methoden, wie beispielsweise chromatographischen Messmethoden. Nach Abschluss der Vorpolymerisation wird der Inhalt des Rührkessels über die Rohrleitung 4 dem Rohrreaktor 5 zugeführt. Im Rohrreaktor 5 findet die eigentliche Polymerisation bis hin zum fertigen Produkt statt. Um das Strömungsprofil bezüglich des Querschnitts des Rohrreaktors 5 zu vereinheitlichen, sind dabei gleiche oder verschiedene Einbauten 6 im Rohrreaktor 5 vorgesehen. Beispielsweise kann es sich hier um perforierte Lochbleche 6a, Verdrängungskörper 6b oder röhrenförmige Elemente 6c handeln. Bei den dreidimensionalen Einbauten 6b und 6c sind diese in axialer Ausrichtung bezüglich des Rohrreaktors 5 so ausgebildet, dass sie eine Vereinheitlichung des Strömungsprofils gewährleisten. Beispielsweise bei den röhrenförmigen Elementen 6c ist ersichtlich, dass hier eine unterschiedlich lange Gestaltung der röhrenförmigen Elemente in axialer Richtung des Rohrreaktors 5 vorgesehen ist. Durch die erhöhten Reibungskräfte des Fluids in der Mitte des Reaktors an den rohrförmigen Elementen 6c ist somit eine Verlangsamung des Fluidflusses in der Mitte gewährleistet. Dies führt zur Vereinheitlichung des Strömungsprofils. Das fertige Produkt wird nach Abschluss der Polymerisationsreaktion über den Auslass 7 entnommen.

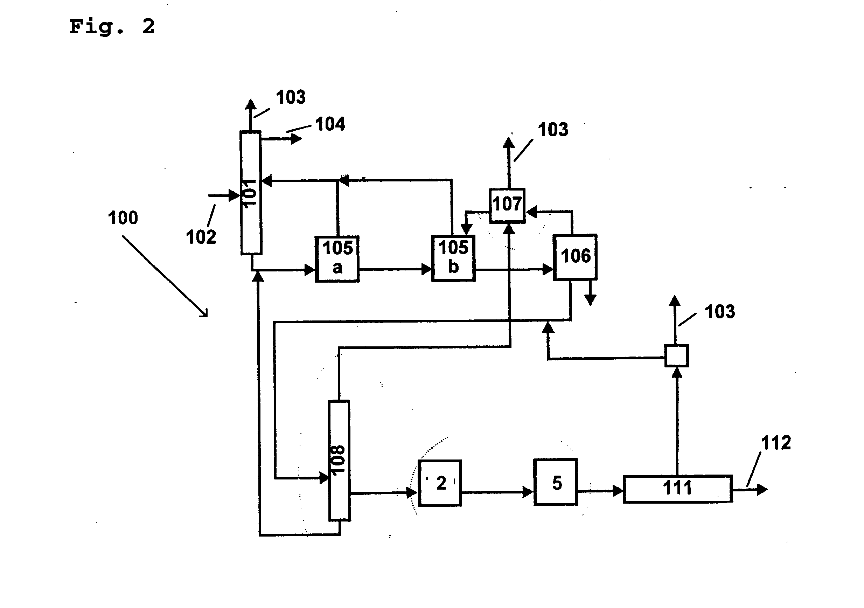

In Fig. 2 ist der kontinuierliche Gesamtprozess der Polylactidherstellung (PLA-Prozess) ausgehend von Milchsäure mit einer erfindungsgemäßen Polymerisationsvorrichtung 100 dargestellt. Der Prozess untergliedert sich dabei in die folgenden Teilschritte, die mit den in die Polymerisationsvorrichtung 100 integrierten, im Folgenden näher erläuterten, Einzelbestandteilen ausgeführt werden.

### 1. Aufkonzentration von Milchsäure

Das Ausgangsmaterial für den Prozess ist Milchsäure. Dabei muss der Gehalt an Milchsäure höher als 80 Gew.-% sein. Vorzugsweise beträgt dabei die Milchsäurekonzentration mehr als 90 %, weil das Wasser vor der Polymerisation entfernt werden muss. Die Trennung von Wasser und Milchsäure wird dabei in einer Rektifikationssäule 101 vorgenommen. Dabei wird über einen Absaugstutzen 103 Vakuum angelegt, das dampfförmig anfallende Wasser wird kondensiert und über einen weiteren Stutzen 104 kopfseitig entnommen. Die Zuführung der Milchsäure erfolgt dabei kontinuierlich über einen weiteren Stutzen 102. Das Destillat ist reines Wasser, das sumpfseitig anfallende Produkt ist Milchsäure mit einer Konzentration von mehr als 99 Gew.-%.

Neben der Abtrennung von Wasser aus dem Ursprungsmaterial (Milchsäure) dient die Rektifikationssäule 101 ebenso zur Trennung der Dämpfe aus den Präkondensations-Reaktoren 105a und 105b. Die Dampfströme bestehen dabei aus Milchsäure, Lactoylmilchsäure, Dilactid und Wasser. Das Wasser wird kopfseitig abgezogen, Milchsäure und ihre Derivate gehen in den Sumpf der Rektifikationssäule und von dort zusammen mit der aufkonzentrierten Milchsäure in den ersten Präkondensations-Reaktor 105a.

### 2. Präkondensation

Die aufkonzentrierte Milchsäure wird in einer Serie von zwei Reaktoren 105a und 105b durch Polykondensation in ein Präpolymer überführt. Die Polykondensation läuft unter zwei verschiedenen Drücken und Temperaturen ab, um den Reaktionsumsatz zu optimieren. Im ersten Reaktor 105a sind die Konditionen so gewählt, dass die Verdampfung von Milchsäure minimiert ist und gleichzeitig die Entfernung von Wasser erleichtert wird. Im zweiten Schritt der Polykondensation ist die Reaktionsgeschwindigkeit durch eine höhere Temperatur erhöht, gleichzeitig wird der Druck vermindert, um die Wasserkonzentration in der Schmelze weiter zu mindern. Die mittlere Molmasse (Zahlenmittel) des Präpolymers liegt dabei zwischen 500 und 2.000 g/mol.

### 3. Cyclisierende Depolymerisation

Das Präpolymer steht in chemischem Gleichgewicht mit dem cyclischen Dimer der Milchsäure, dem Dilactid. Durch Einstellung von Druck und Temperatur im Depolymerisationsreaktor 106 ist gewährleistet, dass das Lactid kontinuierlich aus dem Präpolymer gebildet wird und verdampft. Der Dampfstrom aus dem Depolymerisationsreaktor 106 besteht hauptsächlich aus Lactid. Wasser, Milchsäure und deren lineare Oligomere sind nur in untergeordneten Mengen vorhanden. Die Dämpfe werden teilweise in der erfindungsgemäßen Kondensationsvorrichtung 107 kondensiert: Wasser und der größte Anteil an Milchsäure bleiben dabei dampfförmig. Das Kondensat enthält zuvorderst das Lactid, Lactoylmilchsäure (das lineare Dimer der Milchsäure) und höhere lineare Oligomere.

### 4. Lactid-Reinigung

Während der Ringöffnungspolymerisation hängt das erreichbare Molekulargewicht und somit bedeutende mechanische Eigenschaften des Polylactids vom Reinheitsgrad des Lactids ab. Die Hydroxyl-Gruppen der als Verunreinigung enthaltenen Milchsäure und Lactoylmilchsäure dienen dabei als Ausgangspunkt der Polymerisation. Je höher die Konzentration der Hydroxyl-Gruppen im Lactid ist, desto geringer fällt das erreichbare Molekulargewicht des Polymers aus. Die Konzentration der Hydroxyl-Gruppen im Rohlactid ist nach der cyclisierenden Depolymerisation zu hoch. Das kondensierte Lactid wird in einer Rektifikationssäule 108 bis zur benötigten Hydroxylgruppenkonzentration aufgereinigt. Das gereinigte Lactid wird der Säule 108 als Seitenprodukt entnommen. Das Destillat und das Sumpfprodukt werden dem Prozess an unterschiedlichen Stellen wieder zugeführt. Neben dem Molekulargewicht des Polylactids werden seine Eigenschaften stark durch den D-Gehalt (die Menge an strukturellen Einheiten, die die D-Konfiguration aufweisen) beeinflusst.

### 5. Ringöffnungspolymerisation

Die Ringöffnungspolymerisation wird in einem erfindungsgemäßen Reaktor unternommen, der aus einer Kombination eines Rührkessels 2 und eines Rohrreaktors 5 gebildet ist. Im ersten Reaktor 109 wird das niedrigviskose Lactid zu PLA polymerisiert mit einer Umsetzungsrate von ca. 50 %. Katalysator und Additive werden homogen in die Schmelze eingemischt.

Im Rohreaktor 5 wird die Polymerisationsreaktion so lange fortgeführt, bis ein chemisches Gleichgewicht zwischen Polymer und Monomer erreicht wird. Die maximale Umsetzung des Monomers beträgt ca. 95 %. Während der Polymerisation erhöht sich die Viskosität auf ca. 10.000 pa·sec.

### 6. Entmonomerisierung

Um ein stabiles Polylactid zu erhalten, ist die Monomerkonzentration von ungefähr 5 Gew.-% in der Schmelze zu hoch. Deswegen muss eine Entmonomerisierung durchgeführt werden. Dies wird durch eine Entgasung der Schmelze in einem Doppelschneckenextruder 111 erreicht. Aufgrund der Tatsache, dass die Ringöffnungspolymerisation eine Gleichgewichtsreaktion ist, wird ein Stabilisator vor der Entmonomerisierung zugegeben, um die Rückbildung des Monomers während und nach der Entgasung zu verhindern.

### 7. Granulierung und Kristallisation

Anschließend an die Entmonomerisierung wird die Schmelze dem Extruder 111 entnommen und in ein Granulat 112 überführt. Dabei können sowohl Stranggranulation oder Unterwasser-Granulation durchgeführt werden. In beiden Fällen muss das PLA-Granulat vor der Trocknung und der Verpackung kristallisiert werden. Die Kristallisation wird bei erhöhten Temperaturen und unter Rühren durchgeführt, solange bis das Granulat nicht mehr aneinander klebt.

### Beispiel 1: Strömungssimulation

Die Strömung in einem Rohrreaktor, in dem Ringöffnungspolymerisation von Dilactid zu Polylactid stattfindet, wird mit einer Software für Strömungssimulation simuliert. Der Zulauf besteht aus einem Vorpolymer, ein Gemisch aus Dilactid und Polylactid, so wie es typischerweise aus einem Rührkesselreaktor tritt (siehe Beispiel 2). Die Eintrittsviskosität beträgt 100 mPa˙s. Das Strömungsrohr hat ein L/D-Verhältnis von 5 und die Gesamtverweilzeit beträgt 6 h. Der Rohreaktor wird in vier Segmente unterteilt, welches jedes mit einer Lochblende versehen ist.

### Beispiel 2

In einer kontinuierlichen Pilotanlage werden 2 kg/h gereinigtes Dilactid hergestellt. Das Dilactid hat eine mittlere Carboxylendruppenkonzentration von 10 mmol/kg (gemessen durch Titration) und einen meso-Dilactid-Gehalt von 5% (gemessen durch HPLC). Das Dilactid wird mit Zinnoctoat als Katalysator mit einer Konzentration von 40 ppm Zinn versetzt und strömt in einen Rührkesselreaktor 2, der mit einem Ankerrührer ausgestattet ist und über einen Doppelmantel temperiert wird. Im Rührkesselreaktor findet die Ringöffnungspolymerisation von Dilactid zu Polylactid statt. Die Verweilzeit im Reaktor beträgt vier Stunden und die Temperatur der Schmelze 160°C. Das Produkt hat eine Schmelzeviskosität von 100 mPa˙s bei einer Temperatur von 160 °C; der Umsatz beträgt 40%. Die Dilactid-Polylactid-Schmelze wird kontinuierlich entnommen und in den folgenden Rohrreaktor 5 gepumpt.

Der Rohr- oder Strömungsreaktor 5 ist ein Rohr mit einem Doppelmantel, das mit Einbauten versehen ist. Die Verweilzeit im Reaktor beträgt sechs Stunden. Die Einbauten bestehen aus einer Kombination aus Lochscheiben, Verdrängungskörpern und konzentrischen Ringspalten. Geometrien und Einbaulagen wurden vorher mithilfe einer Strömungssimulation (siehe Beispiel 1) hinsichtlich eines gleichmäßigen Strömungsprofils optimiert.

Optimierungsparameter sind:
1. Bei den Lochblechen
   - Anzahl der Lochbleche,
   - Anzahl der Löcher pro Scheibe,
   - Lochdurchmesser und Lochdurchmesserverteilung,
   - Anordnung der Löcher auf der Scheibe,
   - Abstand zwischen Reaktorwand und Rand des Lochbleches.
2. Bei den Verdrängungsköpern
   - Anzahl der Körper pro Ebene,
   - Abstand zwischen den Körpern,
   - geometrische Form der Körper in Abhängigkeit von der Lage.
3. Bei den konzentrischen Ringspalten
   - Höhe,
   - Breite und
   - Anzahl der einzelnen Ringspalten.

Es wurden 20 Minuten lang im Abstand von einer Minute Proben am Auslauf des Rohrreaktors genommen und bzgl.

Umsatz, Grenzviskosität und der Polydisperitätsindex analysiert. Die Ergebnisse sind in folgender Tabelle dargestellt.

| Zeit min | IV dl/g | Umsatz % | PDI |
|---|---|---|---|
| 1 | 1,86 | 94,2 | 1,98 |
| 2 | 1,87 | 93,8 | 1,99 |
| 3 | 1,86 | 94,7 | 2,02 |
| 4 | 1,86 | 95,1 | 1,97 |
| 5 | 1,83 | 95,2 | 1,96 |
| 6 | 1,81 | 94,9 | 1,99 |
| 7 | 1,87 | 94,4 | 2,00 |
| 8 | 1,87 | 95,6 | 1,97 |
| 9 | 1,85 | 94,7 | 1,97 |
| 10 | 1,83 | 95,2 | 1,99 |
| 11 | 1,88 | 95,1 | 2,02 |
| 12 | 1,90 | 94,1 | 2,05 |
| 13 | 1,82 | 94,2 | 2,01 |
| 14 | 1,90 | 93,8 | 1,99 |
| 15 | 1,91 | 94,7 | 2,00 |
| 16 | 1,83 | 95,1 | 1,96 |
| 17 | 1,87 | 95,6 | 1,97 |
| 18 | 1,86 | 95,1 | 1,91 |
| 19 | 1,81 | 95,2 | 1,95 |
| 20 | 1,82 | 94,1 | 1,91 |

Die Werte für IV, Umsatz und PDI sind innerhalb der Messgenauigkeit konstant, was auf eine gleichmäßige Verweilzeitverteilung und somit auf ein gleichmäßiges Strömungsprofil schließen lässt.

### Messmethoden

1. Monomergehalt:
   Das Polymere wird in Chloroform gelöst und mit Cyclohexan ausgefällt und abfiltriert. Der Dilactidgehalt der Lösung wird mittels HPLC bestimmt und daraus der Umsatz berechnet.
2. IV
   Das Polymere wird in Chloroform gelöst. Die Viskosität der Lösung wird in einem Ubbelhode-Viskosimeter bestimmt und in eine Grenzviskosität umgerechnet.
3. PDI
   Das Zahlenmittel und Gewichtsmittel des Molekulargesichts des Polymeren werden mit GPC bestimmt. Die Eichung von GPC erfolgte gegen Polystyrol-Standards. Der PDI ist das Verhältnis aus Gewichts- und Zahlenmittel.

## Patentansprüche

1. Polymerisationsreaktor (1) zur kontinuierlichen Polymerisation, der mindestens folgende Bestandteile umfasst:
a) mindestens einen Rührkessel und/oder einen Schlaufenreaktor als erste Polymerisationsstufe (2), sowie im Anschluss daran
b) mindestens einen Rohrreaktor (5) als zweite Polymerisationsstufe,
**dadurch gekennzeichnet, dass** der Rohrreaktor Einbauten (6) aufweist, die das Geschwindigkeitsprofil des durchströmenden Fluids über den Querschnitt des Rohrreaktors (5) vergleichmäßigen.

2. Polymerisationsreaktor (1) nach vorhergehendem Anspruch, **dadurch gekennzeichnet, dass** die Einbauten ausgewählt sind aus der Gruppe bestehend aus perforierten Lochscheiben (6a), konzentrischen Ringspalten, Verdrängungskörpern (6b) und/oder röhrenförmigen Elementen (6c).

3. Polymerisationsreaktor (1) nach vorhergehendem Anspruch, **dadurch gekennzeichnet, dass** die konzentrischen Ringspalte, Verdrängungskörper (6b) und/oder röhrenförmigen Elemente (6c) in Abhängigkeit ihrer radialen Anordnung bezüglich des Querschnittes des Rohrreaktors (5) unterschiedliche lang in axialer Richtung des Rohrreaktors (5) ausgebildet sind.

4. Polymerisationsreaktor (1) nach einem der beiden vorhergehenden Ansprüche, **dadurch gekennzeichnet, dass** durch die Einbauten (6) gewährleistet ist, dass der Quotient aus minimaler Verweilzeit des den Rohrreaktor (5) am schnellsten durchströmenden Teil des Fluids und der mittleren Verweilzeit des gesamten Fluids im Rohrreaktor (5) mindestens 0,5 beträgt.

5. Polymerisationsreaktor (1) nach einem der vorhergehenden Ansprüche, **dadurch gekennzeichnet, dass** mindestens zwei Rohrreaktoren (5) hintereinander geschaltet sind.

6. Polymerisationsreaktor (1) nach vorhergehendem Anspruch, **dadurch gekennzeichnet, dass** zwischen jeweils zwei hintereinander geschaltete Rohrreaktoren (5) eine Zwischenpumpe eingebracht ist.

7. Polymerisationsreaktor (1) nach einem der vorhergehenden Ansprüche, **dadurch gekennzeichnet, dass** im produktseitig letzten Drittel des mindestens einen Rohrreaktors (5) mindestens eine Einspeisestelle und/oder mindestens ein Stutzen vorhanden ist.

8. Polymerisationsreaktor (1) nach einem der vorhergehenden Ansprüche, **dadurch gekennzeichnet, dass** die Wandung des Rohrreaktors (5) und/oder die Einbauten über einen Wärmeträger kühlbar und/oder beheizbar sind.

9. Polymerisationsvorrichtung (100) zur Polymerisation eines bioabbaubaren, intermolekularen cyclischen Diesters einer alpha-Hydroxycarbonsäure der Formel I, 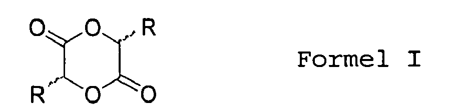 wobei R ausgewählt ist aus Wasserstoff oder linearen oder verzweigten aliphatischen Resten mit 1 bis 6 Kohlenstoffatomen oder bevorzugt Dilactid, umfassend einen Polymerisationsreaktor (1) nach einem der vorhergehenden Ansprüche sowie mindestens eine Reinigungsvorrichtung zur Reinigung des cyclischen Diesters der Formel I.

10. Polymerisationsvorrichtung (100) nach vorhergehendem Anspruch, **dadurch gekennzeichnet, dass** die mindestens eine Reinigungsvorrichtung zur Reinigung des cyclischen Diesters der Formel I dem Polymerisationsreaktor (1) vorgeschaltet ist.

11. Polymerisationsvorrichtung (100) nach vorhergehendem Anspruch, **dadurch gekennzeichnet, dass** die Reinigungsvorrichtung eine Trennwandkolonne (108) umfasst.

12. Polymerisationsvorrichtung (100) nach einem der Ansprüche 9 bis 11, **dadurch gekennzeichnet, dass** dem Polymerisationsreaktor (1) mindestens eine Kondensationsvorrichtung (107) zur Kondensation des Diesters der Formel I aus Dampfgemischen vorgeschaltet ist.

13. Verfahren zur Herstellung von bioabbaubarem Polyester und/oder Copolyester durch Ringöffnungspolymerisation mindestens eines intermolekularen cyclischen Diesters der Formel I 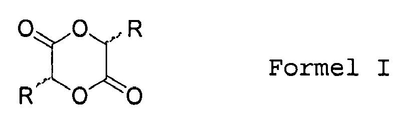 wobei R ausgewählt ist aus Wasserstoff oder linearen oder verzweigten aliphatischen Resten mit 1 bis 6 Kohlenstoffatomen durch die Schritte
a) Einspeisen eines Gemisches enthaltend den Diester der Formel I in die erste Polymerisationsstufe (2) der Vorrichtung nach einem der vorhergehenden Ansprüche und Durchführen einer Vorpolymerisation, sowie
b) Überführen des erhaltenen Vorpolymerisats in die zweite Polymerisationsstufe der Vorrichtung nach einem der vorhergehenden Ansprüche und Durchführen einer Polymerisationsreaktion.

14. Verfahren nach Anspruch 13, **dadurch gekennzeichnet, dass** die Vorpolymerisation im Schritt a) bis zu einem maximalen Umsatz des cyclischen Diesters der Formel I von 5 bis 70 mol-%, bevorzugt 30 bis 60 mol-% durchgeführt wird.

15. Verfahren nach einem der Ansprüche 13 bis 14, **dadurch gekennzeichnet, dass** die Polymerisationsreaktion im Schritt b) bis zu einer maximalen Schmelzviskosität von 100 mPa˙s bis 25.000 mPa˙s, vozugsweise von 500 mPa_{˙}s bis 20.000 mPa˙s durchgeführt wird.

16. Verfahren nach einem der Ansprüche 13 bis 15, **dadurch gekennzeichnet, dass** die Polymerisationsreaktion im Schritt b) bis zu einem Umsatz des cyclischen Diesters der Formel I von mindestens 90 mol-%, bevorzugt mindestens 92,5 mol-%, besonders bevorzugt mindestens 95 mol-% durchgeführt wird.

17. Verfahren nach einem der Ansprüche 13 bis 16, **dadurch gekennzeichnet, dass** während und/oder im Anschluss an Schritt b) Stabilisatoren beigemischt werden.

18. Verfahren nach einem der Ansprüche 13 bis 17, **dadurch gekennzeichnet, dass** im Anschluss an Schritt b) eine Entmonomerisierung durch Extraktion mit einem Lösungsmittel und/oder durch Vakuumentgasung erfolgt.

19. Verfahren nach einem der Ansprüche 13 bis 18, **dadurch gekennzeichnet, dass** dem Gemisch vor Schritt a) und/oder vor Schritt b) Polymerisationskatalysatoren beigemischt werden.

20. Verfahren nach einem der Ansprüche 13 bis 19, **dadurch gekennzeichnet, dass** während und/oder im Anschluss an Schritt b) mindestens ein Additiv, ausgewählt aus der Gruppe bestehend aus Nukleirungsmitteln, Farbstoffen, Verstärkungsstoffen, Verarbeitungshilfsstoffen, Weichmachern, Modifizierungsmitteln, Füllstoffen und/oder Antioxidantien beigemischt wird.

21. Verfahren nach einem der Ansprüche 13 bis 20, **dadurch gekennzeichnet, dass** während und/oder im Anschluss an Schritt b) mindestens ein weiteres Polymer, z.B. ein Polyester, zugeblendet wird.

22. Verfahren nach einem der Ansprüche 13 bis 21 **dadurch gekennzeichnet, dass** der Diester der Formel I Dilactid ist.

23. Verfahren nach einem der Ansprüche 13 bis 22, **dadurch gekennzeichnet, dass** der Diester der Formel I aus einer vorgeschalteten Reinigungsvorrichtung und/oder einer vorgeschalteten Kondensationsvorrichtung stammt.

24. Verwendung eines Polymerisationsreaktors (1) nach einem der Ansprüche 1 bis 8 zur Herstellung von bioabbaubaren Polyestern, bevorzugt Polylactid, besonders bevorzugt L-Polylactid.

25. Verwendung einer Polymerisationsvorrichtung nach einem der Ansprüche 9 bis 12 zur Herstellung von bioabbaubaren Polyestern, bevorzugt Polylactid, besonders bevorzugt L-Polylactid.

26. Verwendung eines Verfahrens nach einem der Ansprüche 13 bis 23 zur Herstellung von bioabbaubaren Polyestern, bevorzugt Polylactid, besonders bevorzugt L-Polylactid.
